# EUROPÄISCHE PATENTSCHRIFT

(11) **EP 3 544 834 B1**
(45) Veröffentlichungstag und Bekanntmachung des Hinweises auf die Patenterteilung: **28.07.2021**
(21) Anmeldenummer: 17829931.9
(22) Anmeldetag: 24.11.2017
(51) Int. Cl.: B60C 23/12, B60C 23/10

(54) **FAHRZEUG MIT VERDICHTERANORDNUNG**
VEHICLE HAVING A COMPRESSOR ASSEMBLY
VÉHICULE ÉQUIPÉ D'UN ENSEMBLE COMPRESSEUR

(30) Priorität: 24.11.2016 DE 102016122736
(43) Veröffentlichungstag der Anmeldung: 02.10.2019
(73) Patentinhaber: KT Projektentwicklungs-GmbH, 74072 Heilbronn (DE); Illinois Tool Works, Inc., Glenview, Illinois 60025 (US)
(72) Erfinder: TSIBERIDIS, Konstantin, 74199 Untergruppenbach (DE)
(74) Vertreter: Trinks, Ole
(86) Internationale Anmeldenummer: PCT/EP2017/080393
(87) Internationale Veröffentlichungsnummer: WO 2018/096112

(56) Entgegenhaltungen:
- WO-A1-2015/063679
- WO-A1-2015/075655
- JP-A- 2007 039 013
- US-A- 2 506 677

## Beschreibung

Die Erfindung betrifft ein Fahrzeug mit einer Verdichteranordnung.

Die Verdichteranordnung dient zur Druckmittelversorgung einer Reifenkavität eines Fahrzeugrades, wobei das Fahrzeugrad eine Radnabenaufnahme umfasst und auf einer Radnabe montiert ist, wobei die Radnabe um eine Rotationsachse drehbar an einem Radträger gelagert ist.

Derartige Verdichteranordnungen sind aus WO2015075655 A1, US2506677 und JP2007039013 bekannt.

Zur Befüllung einer Reifenkavität eines Fahrzeugreifens mit einem Druckmittel, wie etwa Druckluft, ist es
bekannt, ein Reifenventil am Fahrzeugrad vorzusehen, über welches das Druckmittel in die Reifenkavität eingebracht werden kann. Bei Fahrzeugen, wie Personenkraftwagen, Lastkraftwagen oder Nutzfahrzeugen, sind Reifenventile üblicherweise im Bereich einer Felge, auf der der Reifen montiert ist, so angeordnet, dass sie von außen leicht zugänglich sind.

An das Reifenventil kann eine fahrzeugexterne Druckmittelquelle angeschlossen werden, etwa mittels einer Schlauchleitung, um so den Reifendruck auf, insbesondere manuelle, Weise kontrollieren und gegebenenfalls korrigieren zu können.

Unter einer Druckmittelquelle ist dabei sowohl eine Vorrichtung zu verstehen, die Druckmittel unter Druck setzen und fördern kann, wie auch ein Druckmittelspeicher, also ein Speicher für unter Druck stehendes Druckmittel.

Ferner sind fahrzeugseitige Druckmittelversorgungssysteme bekannt, die es gestatten, die Druckmittelbefüllung der Reifenkavität eines Fahrzeugreifens autonom vorzunehmen. Hierzu ist es bekannt, von einer zentralen, fahrzeugseitig bereitgestellten Druckmittelquelle, beispielsweise einem Kompressor oder einem Druckspeicher, Druckmittelleitungen bis zu den Rädern vorzusehen und in die Reifenkavität zu führen. Beim Übergang von gegenüber dem Fahrzeug drehfesten Bauteilen, wie dem Radträger, auf die sich im Fahrbetreib drehenden Räder werden dabei sogenannte Drehdurchführungen realisiert, die eine Druckmittelbefüllung auch während der Fahrt, d.h. bei sich drehenden Rädern, ermöglichen. Auf diese Weise kann der Reifendruck z.B. an veränderte Beladungsverhältnisse, Fahrbahnoberflächen und Umgebungstemperaturen angepasst werden oder Leckagen bspw. über Diffusion ausgeglichen werden.

Die bekannten Systeme weisen unterschiedliche Probleme auf. Bei fahrzeugexternen Druckmittelquellen muss jeweils gehalten und der Druck in allen Reifenkavitäten aufwändig geprüft werden. Bei den bekannten fahrzeugseitigen Druckmittelquellen, die über Drehdurchführungen Druckmittel an die Reifenkavität fördern, stellt die Betriebssicherheit der Drehdurchführungen für das Druckmittel ein Problem dar. Die Drehdurchführungen lassen sich nur mit sehr hohem Aufwand derart robust und langlebig fertigen, dass sie ein Fahrzeugleben lang halten, was teuer und unwirtschaftlich ist.

Aufgabe der vorliegenden Erfindung ist es, Fahrzeug mit einer Verdichteranordnung zu schaffen, die zuverlässig und wartungsarm über ein gesamtes Fahrzeugleben hinweg eine Befüllung der Reifenkavität mit Druckmittel sicherstellt.

Vorzugsweise arbeitet die Verdichteranordnung dabei automatisiert. Unter automatisiert ist dabei zu verstehen, dass hier kein Anhalten und Verwenden einer fahrzeugexternen Druckmittelquelle nötig ist.

Die Aufnahme des Betriebs also der Übergang in einen Arbeitsbetriebszustand der Verdichteranordnung des erfindungsgemäßen Fahrzeugs kann dabei autonom, bspw. über eine beliebig gestaltete Regel- oder Steueranordnung im Fahrzeug erfolgen oder auch über ein Steuersignal durch den Fahrzeugführer hin.

Diese Aufgabe wird durch ein Fahrzeug mit einer Verdichteranordnung nach Anspruch 1 gelöst. Das erfindungsgemäße Fahrzeug zeichnet sich dadurch aus, dass die Verdichteranordnung im Bereich der Radaufnahme, vorzugsweise in der Radaufnahme, angeordnet ist.

Hierdurch kann die Verdichteranordnung nabenseitig angeordnet werden also drehfest mit den nabenseitigen Komponenten, also drehfest mit den sich gegenüber der Fahrgastzelle drehenden Komponenten, ausgebildet sein. Mit anderen Worten, die Verdichteranordnung dreht sich also beim Betrieb des Fahrzeugs mit dem Fahrzeugrad mit. Durch die nabenseitige Anordnung der Verdichteranordnung kann unter Druck bereitgestelltes Druckmittel direkt am sich drehenden Fahrzeugrad zur Verfügung gestellt werden. Eine Drehdurchführung für das Druckmittel ist dadurch nicht notwendig. Mit anderen Worten, das Druckmittel wird direkt am Einsatzort, also an der sich drehenden Reifenkavität bereitgestellt.

Bevorzugt ist, wenn ein Kompressionsraum der Verdichteranordnung, also ein Raum in dem Druckmittel mit Druck beaufschlagt wird, nabenseitig angeordnet ist, also stets drehfest ist mit den sich im Fahrbetreib des Fahrzeugs drehenden nabenseitigen Komponenten.

Wie bereits oben ausgeführt sind Drehdurchführungen für Druckmittel schwierig zu gestalten und ihre zuverlässige und langfristige funktionsfähige Realisierung ist technisch anspruchsvoll. Die Realisierung solcher Druckmitteldrehdurchführungen wird überdies durch die widrigen Umstände im Bereich des Fahrzeugrades erschwert, da hier mit starken Verschmutzungen uns stoßartigen Belastungen zu rechnen ist. Das erfindungsgemäße Fahrzeug ermöglicht also eine wartungsarme und betriebssichere Anbringung einer Verdichteranordnung, die bei Bedarf stets Druckmittel unter ausreichendem Druck zur Verfügung stellen kann und damit stets einen auszureichenden Füllzustands des Reifens sicherstellen kann. Das Fahrzeug wird damit insgesamt sicherer.

Von Vorteil ist insbesondere, wenn die Verdichteranordnung wenigstens einen gegenüber der Radnabe drehfest angeordneten Kompressionsraum umfasst. Da der Kompressionsraum drehfest gegenüber der Radnabe angeordnet ist, kann das vom Kompressionsraum bereitgestellte Druckmittel über eine starre Leitung der Reifenkavität zugeführt werden.

Der Begriff Kompressionsraum ist damit dabei im Sinne der vorliegenden Anmeldung weit zu verstehen. Jeglicher Raum in dem Druckmittel komprimiert, also unter Druck gesetzt werden kann, fällt unter diesen Begriff.

Dabei ist besonders bevorzugt, wenn das Volumen des Kompressionsraums, vorzugsweise durch eine, insbesondere translatorische, Bewegung eines nabenseitigen Verdichterbauteils, veränderbar ist, wobei durch eine Volumenverminderung des Kompressionsraums ein in die Reifenkavität zu leitendes Druckmittel unter Druck setzbar ist. Eine derartig ausgebildete Verdichteranordnung arbeitet quasi als Kolbenpumpe und stellt eine besonders baulich kompakte und effiziente Ausführungsform dar.

Vorteilhaft ist, wenn die Verdichteranordnung einen elektrischen Antrieb umfasst. Hierdurch kann die Verdichteranordnung auch bei stehendem Fahrzeug betrieben werden.

Vorteilhaft ist auch wenn, das Verdichterbauteil im Betrieb der Verdichteranordnung eine oszillierende translatorische Bewegung in Richtung der Rotationsachse ausführt. Die Ausbildung mit translatorisch oszillierendem Verdichterbauteil hat den Vorteil, dass keine radialen Kräfte auftreten, die zu Unwuchten beim Betrieb des Fahrzeugrades führen.

Eine Ausführungsform kennzeichnet sich dadurch, dass das Verdichterbauteil im Betrieb der Verdichteranordnung eine oszillierende translatorische Bewegung in radialer Richtung ausführt. Hierdurch kann eine besonders hohe Förderleistung der Verdichteranordnung erzielt werden und bei Verwendung mehrerer Verdichterbauteile eine besonders kontinuierliche Förderleistung erzielt werden.

Vorteilhafter Weise umfasst die Verdichteranordnung eine Getriebeanordnung zur Umwandlung einer rotierenden Bewegung eines antriebsseitigen Getriebeteils des, vorzugsweise elektrischen, Antriebs in eine translatorische Bewegung des Verdichterbauteils. Eine rotierende Bewegung ist über einen elektrischen Antrieb besonders einfach bereitstellbar. Und eine translatorische Bewegung des Verdichterbauteils stellt eine besonders effiziente und betriebssichere Art der Druckmittelförderung dar.

Von Vorteil ist auch, wenn die Getriebeanordnung ein Kurvengetriebe umfasst. Hierdurch kann eine rotatorische Relativbewegung zwischen einem antriebsseitigen Getriebeteil und den übrigen Komponenten der Verdichteranordnung effizient in eine translatorische Bewegung des Verdichterbauteils umgewandelt werden.

Von Vorteil ist auch, wenn der elektrische Antrieb über eine Bordspannungsquelle, insbesondere über die Hauptbatterie des Fahrzeugs, gespeist wird und Schleifkontakte zur Übertragung elektrischer Energie von der Radträgerseite zur Nabenseite vorgesehen sind. Dies hat den Vorteil, dass keine zusätzliche Energiequelle oder ein Energiespeicher für die Verdichteranordnung bereitgestellt werden muss, sondern die elektrische Energie der Bordspannungsquelle zum Betrieb genutzt werden kann.

Vorteilhaft ist auch, wenn nabenseitig eine elektrische Energiequelle, insbesondere ein Energiespeicher, vorzugsweise ein Akkumulator, vorgesehen ist. Hierdurch wird die Hauptbatterie des Fahrzeugs entlastet und ein Betrieb der Verdichteranordnung ist auch bei stehendem Fahrzeug bzw. bei erschöpfter Bordspannungsquelle möglich.

In einer bevorzugten Ausführungsform ist nabenseitig ein Generator vorgesehen, der die rotatorische Relativbewegung zwischen nabenseitigen und radträgerseitigen Komponenten in elektrische Energie zum Antrieb der Verdichteranordnung umwandelt. Im Betrieb des Fahrzeugs tritt ohnehin eine rotatorische Relativbewegung zwischen nabenseitigen und radträgerseitigen Komponenten auf. Diese rotatorische Relativbewegung kann bei Bedarf dann zur Energieversorgung der Verdichteranordnung genutzt werden.

Eine vorteilhafte Ausführungsform kennzeichnet sich dadurch, dass eine Kupplungseinrichtung zur Kopplung und Entkopplung eines nabenseitigen Getriebeteils mit einem antriebsseitigen Getriebeteil umfasst. Dadurch kann die Verdichteranordnung in einfacher Art und Weise von einem Arbeitsbetriebszustand in einen Freilaufbetriebszustand überführt werden.

Eine weitere bevorzugte Ausführungsform kennzeichnet sich dadurch, dass eine Einrichtung zur kontaktlosen Übertragung von Energie einer radträgerseitigen Energiequelle zur Nabenseite, insbesondere zur Verdichteranordnung, vorgesehen ist. Hierdurch werden Verschleißerscheinungen bei der Energieversorgung der Verdichteranordnung vermieden.

Vorteilhaft ist, wenn die Verdichteranordnung druckmitteleinlassseitig mit einem Filter verbunden ist. Dies verhindert Verstopfungen der Verdichteranordnung.

Vorteilhaft ist, wenn die Verdichteranordnung ausgebildet ist, um Druckmittel aus der Reifenkavität oder über Förderung durch die Verdichteranordnung zum Reinigen des Filters zu verwenden. Hierdurch wird die Verdichteranordnung selbstwartend.

In einer weiteren Ausführungsform wird elektrische Energie zum Betrieb der Verdichteranordnung von einer Hauptbatterie des Fahrzeugs über symbolisch dargestellte Schleifkontakte von der Radträgerseite zur Nabenseite übertragen.

In einer weiteren Ausführungsform wird elektrische Energie zum Betrieb der Verdichteranordnung direkt nabenseitig über einen Energieerzeuger, der vorzugsweise wenigstens teilweise nabenseitiges angeordnet ist, bereitgestellt. Der Energieerzeuger ist vorzugsweise ein Generator. Der Energieerzeuger nutzt zur Stromerzeugung die rotatorische Relativbewegung zwischen Radträgerseite und Nabenseite aus.

In einer weiteren Ausführungsform wird elektrische Energie zum Betrieb der Verdichteranordnung von der Hauptbatterie des Fahrzeugs über eine symbolisch dargestellte kontaktlose, vorzugsweise induktive, Übertragungseinrichtung von der Radträgerseite zur Nabenseite übertragen.

In einer weiteren Ausführungsform wird elektrische Energie zum Betrieb der Verdichteranordnung direkt nabenseitig über einen Energiespeicher, der vorzugsweise als Akkumulator ausgeführt ist, bereitgestellt. Bevorzugt ist dabei die Kombination des Energiespeichers mit einem Energieerzeuger. Der Energieerzeuger ist vorzugsweise ein Generator. Der Energieerzeuger nutzt zur Stromerzeugung die rotatorische Relativbewegung zwischen Radträgerseite und Nabenseite aus.

Vorzugsweise nimmt die Verdichteranordnung ihren Betrieb autonom auf, wenn ein Reifendruckschwellenwert unterschritten ist.

Vorzugsweise stellt die Verdichteranordnung ihren Betrieb autonom ein, wenn ein Reifendrucksollwert überschritten ist.

Die Verdichteranordnung kann auch vom Fahrer des Fahrzeugs steuerbar sein, das heißt auf ein Steuersignal des Fahrers hin Betrieb aufnehmen und einstellen, vorteilhaft ist dabei, wenn der Fahrer Sollwerte für Reifendruckschwellenwert und/ oder Reifendrucksollwert vorgeben kann bzw. vorgibt.

Weitere Merkmale, Anwendungsmöglichkeiten und Vorteile der Erfindung ergeben sich aus der nachfolgenden Beschreibung von Ausführungsbeispielen der Erfindung, die anhand der Zeichnung erläutert werden, wobei die Merkmale sowohl in Alleinstellung als auch in unterschiedlichen Kombinationen für die Erfindung wesentlich sein können, ohne dass hierauf nochmals explizit hingewiesen wird. Es zeigen:
Figur 1 eine schematische Darstellung eines erfindungsgemäßen Fahrzeugs mit Verdichteranordnungen;
Figur 2 die Einbaulage der Verdichteranordnungen im Detail;
Figuren 3
   bis 6 eine Verdichteranordnung einer ersten Ausführungsform;
Figuren 7
   bis 10 eine weitere Ausführungsform der Verdichteranordnung; und

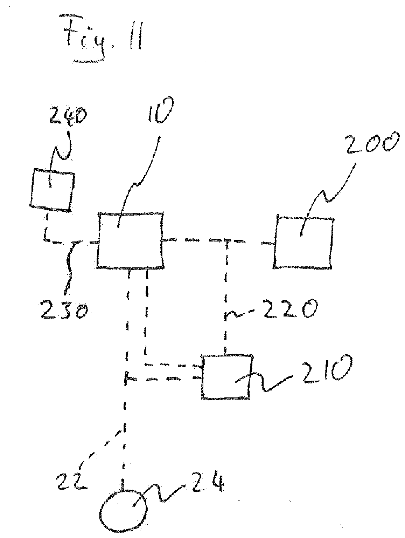

Figur 11 eine schematische Darstellung einer Ausführungsform der Verdichteranordnung mit einem Filter.

In den folgenden Figuren tragen sich entsprechende Bauteile und Elemente gleiche Bezugszeichen. Der besseren Übersichtlichkeit wegen sind nicht in allen Figuren sämtliche Bezugszeichen wiedergegeben.

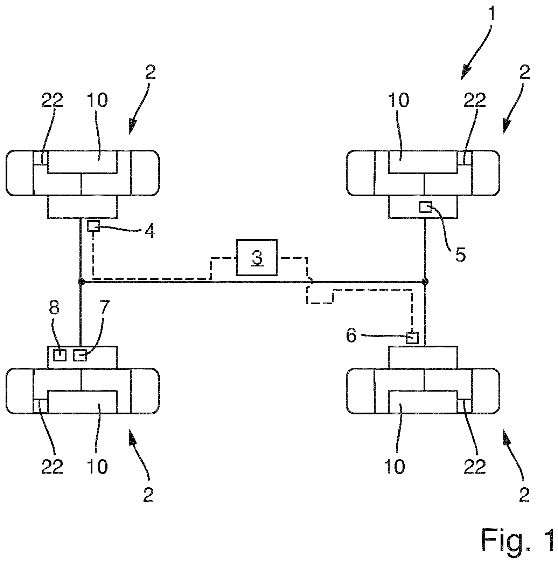

Figur 1 zeigt ein schematisch dargestelltes erfindungsgemäßes Fahrzeug 1. Das Fahrzeug weist vorliegend vier Fahrzeugräder 2 auf, wobei die vorliegende Erfindung nicht auf vierrädrige Fahrzeuge 1 beschränkt ist. Jedem der Fahrzeugräder 2 ist eine in Figur 1 schematisch dargestellte Verdichteranordnung 10 zugeordnet.

Bei einem Fahrzeugrad 2 wird elektrische Energie zum Betrieb der Verdichteranordnung 10 von einer Hauptbatterie 3 des Fahrzeugs über symbolisch dargestellte Schleifkontakte 4 von der Radträgerseite zur Nabenseite übertragen.

Bei einem weiteren Fahrzeugrad 2 wird elektrische Energie zum Betrieb der Verdichteranordnung 10 direkt nabenseitig über einen Energieerzeuger 5, der vorzugsweise wenigstens teilweise nabenseitiges angeordnet ist, bereitgestellt. Der Energieerzeuger 5 ist vorzugsweise ein Generator. Der Energieerzeuger 5 nutzt zur Stromerzeugung die rotatorische Relativbewegung zwischen Radträgerseite und Nabenseite aus.

Bei einem weiteren Fahrzeugrad 2 wird elektrische Energie zum Betrieb der Verdichteranordnung 10 von der Hauptbatterie 3 des Fahrzeugs über eine symbolisch dargestellte kontaktlose, vorzugsweise induktive, Übertragungseinrichtung 6 von der Radträgerseite zur Nabenseite übertragen.

Bei einem weiteren Fahrzeugrad 2 wird elektrische Energie zum Betrieb der Verdichteranordnung 10 direkt nabenseitig über einen Energiespeicher 7, der vorzugsweise als Akkumulator ausgeführt ist, bereitgestellt. Bevorzugt ist dabei die Kombination des Energiespeichers 7 mit einem Energieerzeuger 8. Der Energieerzeuger 5 ist vorzugsweise ein Generator. Der Energieerzeuger 5 nutzt zur Stromerzeugung die rotatorische Relativbewegung zwischen Radträgerseite und Nabenseite aus.

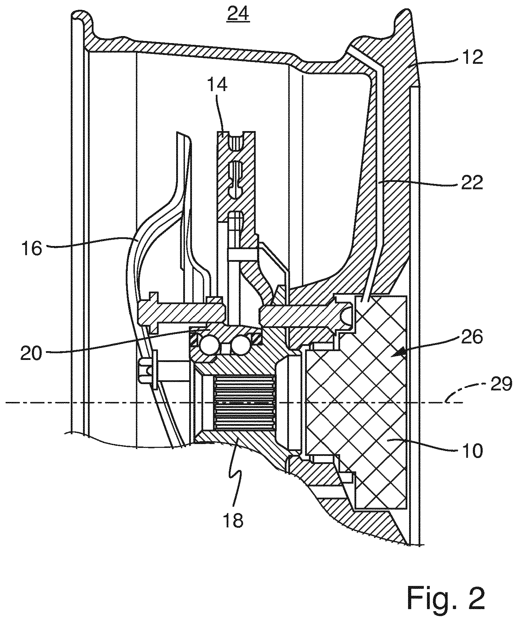

In Figur 2 ist die Anordnung der Verdichteranordnung 10 in den einzelnen Fahrzeugrädern 2 schematisch anhand eines der Fahrzeugräder 2 dargestellt. Die Verdichteranordnung ist dabei bezüglich ihrer Lage durch eine kreuzschraffierte Fläche mit dem Bezugszeichen 10 dargestellt.

Eine Felge trägt das Bezugszeichen 12, eine Bremsscheibe das Bezugszeichen 14, ein Radträger das Bezugszeichen 16, eine Radnabe das Bezugszeichen 18 und ein Radlager trägt das Bezugszeichen 20.

Von der Verdichteranordnung 10 erstreckt sich eine Druckmittelleitung 22 bis zur Reifenkavität 24.Der Reifen selbst ist in Figur 2 nicht dargestellt.

Die Verdichteranordnung ist erfindungsgemäß also, wie in Figur 2 gezeigt, im Bereich, insbesondere in der Radnabenaufnahme 26 angeordnet. Über die Druckmittelleitung 22 gelangt von der Verdichteranordnung 10 unter Druck bereitgestelltes Druckmittel in die Reifenkavität 24.

In der in Figur 2 gezeigten Ausführungsform erstreckt sich die Druckmittelleitung 22 durch das Material der Felge 12. Die nabenseitigen Komponenten des Fahrzeugrads 2 sind um eine Rotationsachse 29 drehbar bezüglich dem Radträger 18 über das Radlager 20 gelagert.

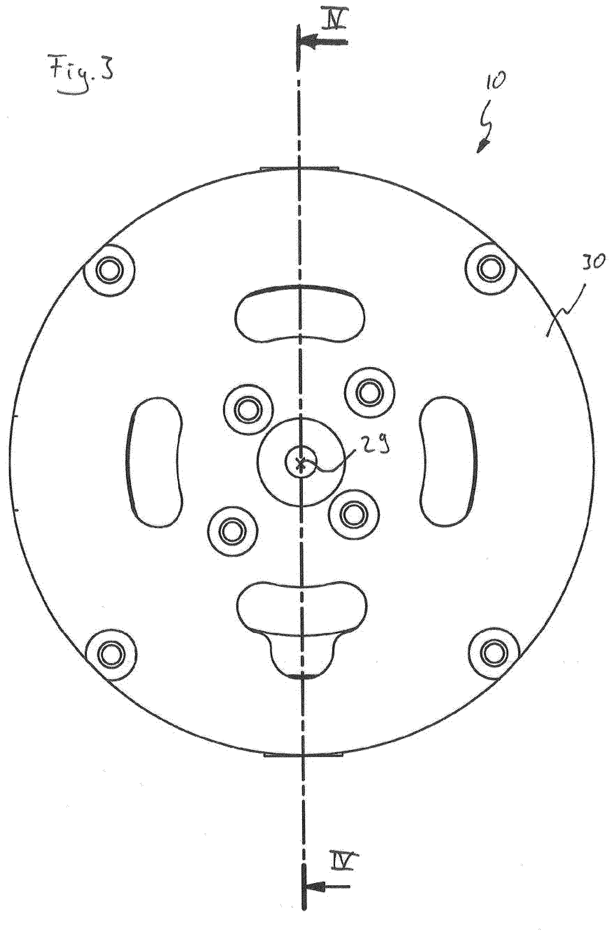

Figur 3 zeigt eine erste Ausführungsform einer erfindungsgemäßen Verdichteranordnung 10 im Detail in einer Seitenansicht. Die Verdichteranordnung 10 umfasst ein erstes nabenseitiges Gehäuseteil 30 sowie ein zweites nabenseitiges Gehäuseteil 32 die drehfest miteinander verbunden sind.

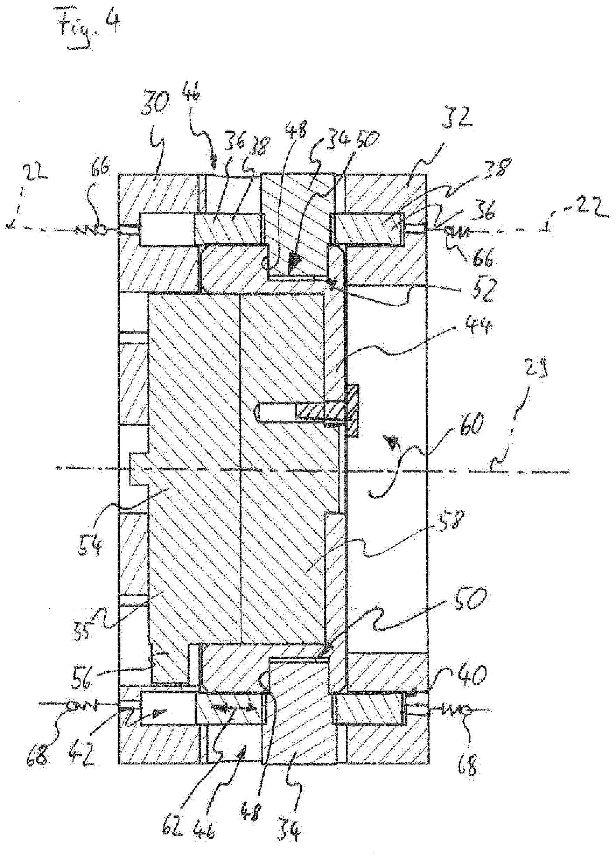

In Figur 4 ist die Verdichteranordnung aus Figur 3 entlang der der Linie IV-IV mit Blick in Richtung der entsprechenden Pfeile geschnitten dargestellt.

Ein nabenseitiges Getriebeteil trägt das Bezugszeichen 34. In Figur 3 ist erkennbar, dass die Verdichteranordnung 10 mehrere der nabenseitigen Getriebeteile 34 aufweist. Mit den nabenseitigen Getriebeteilen 34 ist ein Ringkolben 36 verbunden, der ein Verdichterbauteil 38 darstellt.

Der Ringkolben 36 ist als Doppelkolben ausgebildet und begrenzt einen ersten Kompressionsraum 40 sowie einen zweiten Kompressionsraum 42. Der erste Kompressionsraum 40 und der zweite Kompressionsraum 42 sind jeweils als Ringräume ausgeführt.

Die nabenseitigen Getriebeelemente 34 stehen mit einem antriebsseitigen Getriebeteil 44 derart in Eingriff, dass sie mit diesen zusammenwirken können. Die nabenseitigen Getriebeelemente 34 bilden gemeinsam mit dem antriebsseitigen Getriebeteil 44 eine Getriebeanordnung 45, die ein Kurvengetriebe darstellt. Die nabenseitige Getriebeteile 34 sind in dem zweiten nabenseitigen Gehäuseteil 32 in schlitzartigen Ausnehmungen 46 gelagert. Durch die Lagerung in den schlitzartigen Ausnehmungen 46 können die nabenseitigen Getriebeteile 34 sich lediglich entlang der Richtung der Rotationsachse 29 translatorisch gegenüber dem zweiten nabenseitigen Gehäuseteil 32 bewegen, sie sind jedoch an einer Rotation gegenüber dem zweiten nabenseitigen Gehäuseteil 32 und dem Verdichterbauteil 38 gehindert.

Die nabenseitigen Getriebeteile 34 stehen wie bereits erwähnt im Eingriff mit dem antriebsseitigen Getriebeteil 44. Die Eingriffsabschnitte 48 der jeweiligen nabenseitigen Getriebeteile 34 greifen dabei in eine an dem antriebsseitigen Getriebeteil 44 befindliche Kurvenbahn 50 ein. Die Kurvenbahn 50 ist eine Ausführungsform einer Zylinderkurve 52.

Im Inneren der nabenseitigen Gehäuseteile 30 und 32 ist ein elektrischer Antrieb 54 angeordnet. Der elektrische Antrieb 54 ist mit einem ersten Abschnitt 55 über einen Zapfen 56 drehfest mit dem ersten nabenseitigen Gehäuseteil 30 und über dieses indirekt mit dem zweiten nabenseitigen Gehäuseteil 32 verbunden. Ein zweiter Abschnitt 58 des elektrischen Antriebs 54 ist gegenüber dem ersten Abschnitt 55 rotierbar und drehfest mit dem antriebsseitigen Getriebeteil 44 verbunden.

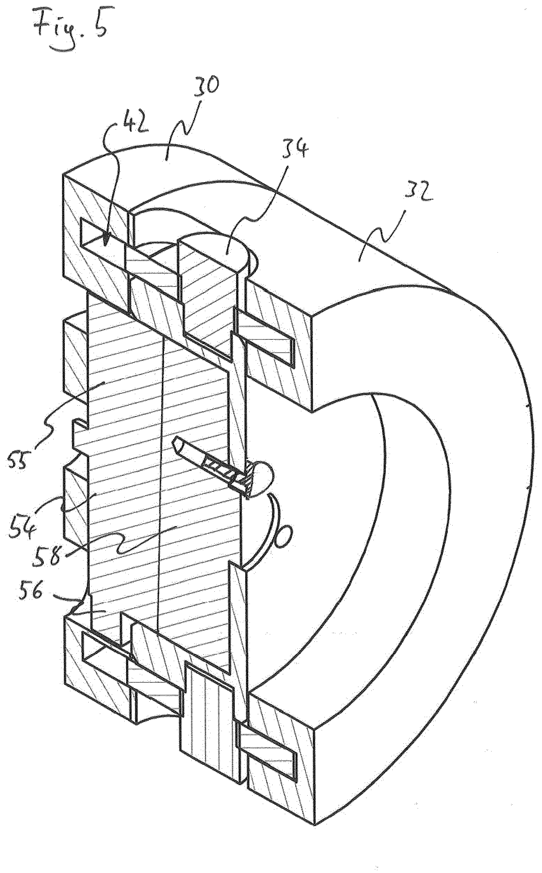

In Figur 4 ist die Verdichteranordnung 10 aus den Figuren 2 und 3 in einer perspektivischen und geschnittenen Darstellung gezeigt. In Figur 5 ist die Verdichteranordnung 10 in einer der Figur 4 ähnlichen perspektivischen Darstellung gezeigt, wobei lediglich eines der nabenseitigen Getriebeteile 34 dargestellt ist. Der Ringkolben 36, das zweite nabenseitige Getriebeteil 34 und das erste nabenseitige Gehäuseteil 30 sind jeweils nicht dargestellt. In Figur 5 ist daher der Verlauf der Kurvenbahn 50 besonders deutlich sichtbar.

Im Betrieb der Verdichteranordnung 10 rotiert der zweite Abschnitt 58 des elektrischen Antriebs 54 gegenüber dem ersten Abschnitt 55. Hierdurch wird das antriebsseitige Getriebeteil 44 gegenüber den nabenseitigen Gehäuseteilen 30 und 32, sowie den nabenseitigen Getriebeteilen 34 in Rotation, die durch den Pfeil 60 in Figur 4 angedeutet ist, versetzt.

Die nabenseitigen Getriebeteile 34 stehen mit einem antriebsseitigen Getriebeteil 44 derart in Eingriff, dass sie mit diesen zusammenwirken können. Durch dieses Zusammenwirken wird die eben genannte rotatorische Relativbewegung 60 in eine oszillierende translatorische Bewegung 62 der nabenseitigen Getriebeteile 34 und damit der Verdichterbauteile 38 also der Ringkolben 36 umgewandelt. Durch die oszillierende translatorische Bewegung wird das Volumen des ersten Kompressionsraums 40 und des zweiten Kompressionsraums 42 abwechselnd vermindert und vergrößert, wodurch in den Kompressionsräumen 40, 42 befindliches Druckmittel, welches vorliegend Luft ist, komprimiert, also unter Druck gesetzt und gefördert. Die Luft, also das Druckmittel, wird in einem jeweiligen Förderhub der Ringkolben 36 über zur Reifenkavität 24 hin öffnende Rückschlagventile 66 zur Reifenkavität 24 hin über die Druckmittelleitung 22 gefördert. In einem jeweiligen Saughub der Ringkolben 36 öffnen zum jeweiligen Kompressionsraum 40, 42 hin öffnende Rückschlagventile 68 und Luft kann in die Kompressionsräume 40 und 42 einströmen.

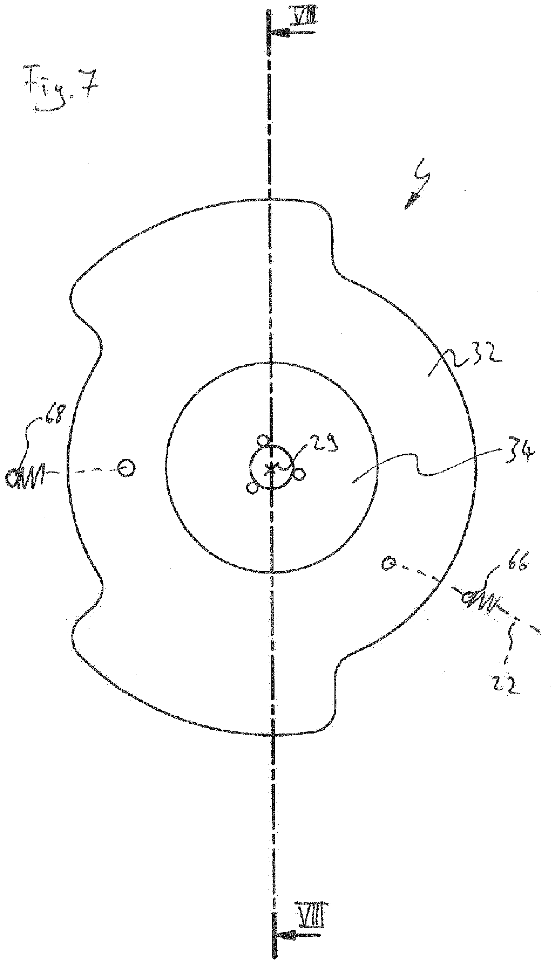

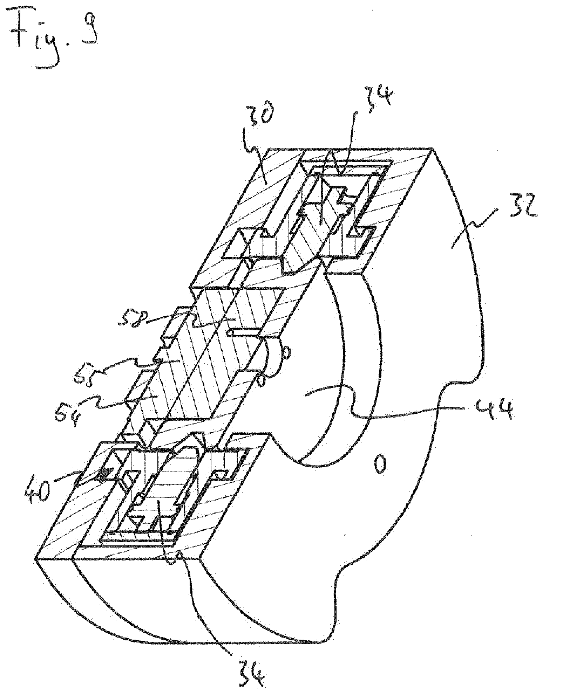

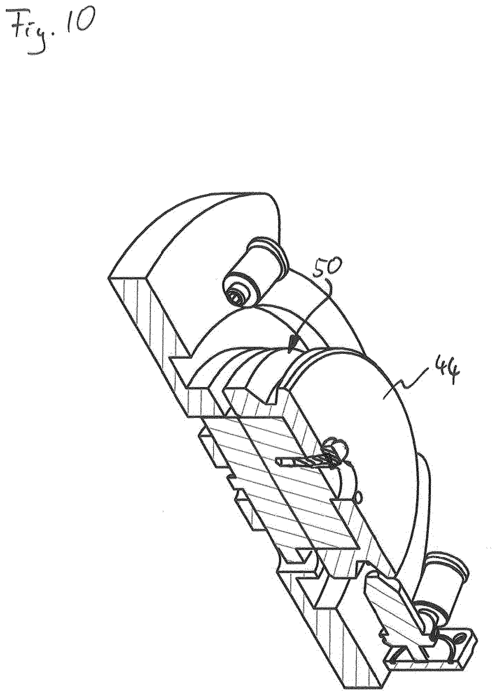

Figuren 7 bis 10 zeigen eine alternative Ausführungsform einer erfindungsgemäßen Verdichteranordnung 10.

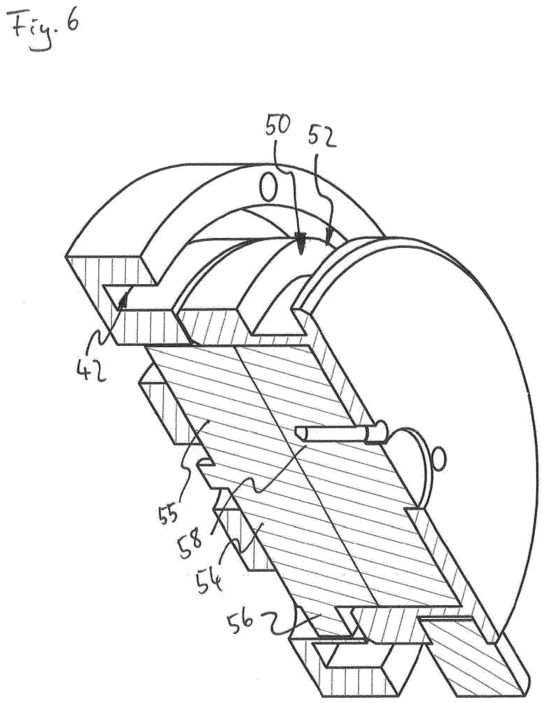

Die Ausführungsform gemäß den Figuren 7 bis 10 unterscheidet sich von der vorigen Ausführungsform der Figuren 3 bis 6 dadurch, dass die nabenseitigen Getriebeteile 34 kuppelbar mit dem antriebsseitigen Getriebeteil 44 sind. Die nabenseitigen Getriebeteile 34 bilden damit Teil einer Kupplungseinrichtung 70. Zur Kupplung der nabenseitigen Getriebeteile 34 mit dem antriebsseitigen Getriebeteil 44 wird eine getriebeteilseitige Druckmittelkammer 72 mit Druckmittel beaufschlagt, wodurch sich die nabenseitigen Getriebeteile 34 in Richtung des antriebsseitigen Getriebeteils 44 bewegen.

Werden die getriebeteilseitigen Druckräume 60 nicht mehr mit Druckmittel beaufschlagt so kehren die nabenseitigen Getriebeteile 34 in ihre entspannte Stellung wie beim unteren der beiden nabenseitigen Getriebeteile 34 gezeigt, da sie jeweils durch eine Druckfeder 74 in diese Position vorgespannt sind.

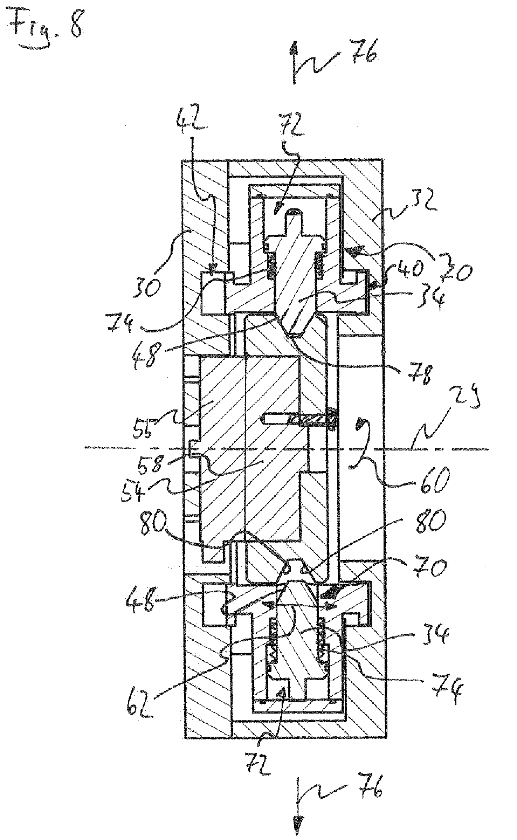

Der in Figur 8 gezeigte obere nabenseitige Getriebeteil 34 steht in Eingriff mit dem antriebsseitigen Getriebeteil 44 und wirkt mit diesem zusammen.

Um in Eingriff mit dem antriebsseitigen Getriebeteil 44 gebracht zu werden, bewegen sich die nabenseitigen Getriebeteile 34 also in einer radialen Richtung 76 zum antriebsseitigen Getriebeteil 44 hin. Die nabenseitigen Getriebeteile 34 sind an ihrem Eingriffsabschnitt 48 an ihrem dem antriebsseitigen Getriebeteil zugewandten Ende 78 mit einem Querschnitt ausgeführt, dessen Erstreckung sich in radialer Richtung aufweitet.

Die Kurvenbahn 50 weist zwei Kurvenflanken 80 auf, wobei beide Kurvenflanken in radialer Richtung zur Rotationsachse hin verlaufen. Mit anderen Worten, in der Schnittansicht von Figur 8, also bei einem Schnitt entlang der radialen Richtung 76, verlaufen die Kurvenflanken 80 nicht exakt in radialer Richtung 76. Anders ausgedrückt, die lichte Weite der Kurvenbahn 50 steigt nach radial außen an. Durch die eben beschriebene und grob gesagt abgeschrägte Ausführung der Kurvenbahn 50 sowie der Eingriffsabschnitte 48 der nabenseitigen Getriebeteile 34 wird ein sanftes Ein- und Auskuppeln der Getriebeteile 34 in das antriebsseitige Getriebeteil 44 ermöglicht.

Befinden sich die nabenseitigen Getriebeteile 34 im in das antriebsseitige Getriebeteil 44 eingekuppelten Zustand so wird die Verdichteranordnung 10 betrieben wie im Hinblick auf die Ausführungsform der Figuren 3 bis 6 beschrieben. Der Betrieb kann durch Auskuppeln der Getriebeteile 34, 44 oder durch Unterbrechung des Betriebs des elektrischen Antriebs 54 herbeigeführt werden, die Verdichteranordnung 10 also von einem Arbeitsbetriebszustand in ein Freilauf Betriebszustand überführt werden.

Wie in Figur 11 gezeigt, kann die Verdichteranordnung 10 allgemein mit einem Filter 200 und einer Kontrolleinrichtung 210 verbunden sein. Der Filter 200 ist dabei vorzugweise derart angeordnet, dass er fluidisch vor den Druckmitteleinlässen bzw. Lufteinlässen der Verdichteranordnung 10 angeordnet ist.

Über eine Messverbindung 220 kann die Kontrolleinrichtung 210 erfassen, wenn der Filter 200 verstopft ist. Wird eine Verstopfung des Filters 200 durch die Kontrolleinrichtung wandert 10 erfasst, so kann der Filter dadurch gereinigt werden, dass er in umgekehrter Strömungsrichtung mit Druckmittel bzw. Luft beaufschlagt wird. In der üblichen Betriebsweise der Verdichteranordnung 10 wird Luft über den Filter 200 in Richtung der Verdichteranordnung 10 und von dort zur Reifenkavität 24 gefördert. In einem Reinigungsvorgang wird Druckmittel bzw. Luft entweder aus der Reifenkavität 24 abgelassen und in umgekehrter Strömungsrichtung durch den Filter 200 gefördert oder die Verdichteranordnung 10 nimmt ihren Betrieb auf und fördert Druckmittel statt zur Reifenkavität 24 in umgekehrter Strömungsrichtung zum Filter 200. Hierzu saugt die Verdichteranordnung 10 Druckmittel über einen zusätzlichen Einlass 230 ein, der einen weiteren Luftfilter 240 aufweist, der in ähnlicher Weise gereinigt werden kann.

Vorteilhafterweise kann die Kontrolleinrichtung 210 zur Messung und/oder Anzeige des Drucks, der Temperatur und/oder der Feuchtigkeit des Druckmittels in der Reifenkavität 24 dienen, wobei diese Funktionen unabhängig von den weiteren Funktionen der Kontrolleinrichtung 210 sind.

## Patentansprüche

1. Fahrzeug mit einer Verdichteranordnung (10) zur Druckmittelversorgung einer Reifenkavität (24) eines Reifens eines Fahrzeugrads (2), wobei das Fahrzeugrad (2) eine Radnabenaufnahme (26) umfasst und auf einer Radnabe (18) montiert ist, wobei die Radnabe (18) um eine Rotationsachse (29) drehbar an einem Radträger (16) gelagert ist, wobei die Verdichteranordnung (10) im Bereich der Radnabenaufnahme (26), vorzugweise in der Radnabenaufnahme (26), angeordnet ist, wobei die Verdichteranordnung (10) wenigstens einen gegenüber der Radnabe (18) drehfest angeordneten Kompressionsraum (40, 42) umfasst, wobei das Volumen des Kompressionsraums (40, 42) durch eine translatorische Bewegung (62) eines nabenseitigen Verdichterbauteils (38) veränderbar ist, wobei durch eine Volumenverminderung des Kompressionsraums (40, 42) ein in die Reifenkavität (24) zu leitendes Druckmittel unter Druck setzbar ist, wobei die Verdichteranordnung (10) einen elektrischen Antrieb (54) umfasst, und wobei das nabenseitige Verdichterbauteil (38) ein Ringkolben (36) ist, der als Doppelkolben ausgebildet ist.

2. Fahrzeug mit einer Verdichteranordnung (10) nach Anspruch 1,
wobei das Verdichterbauteil (38) im Betrieb der Verdichteranordnung (10) eine oszillierende translatorische Bewegung (62) in Richtung der Rotationsachse (29) ausführt.

3. Fahrzeug mit einer Verdichteranordnung (10) nach Anspruch 1 oder 2, wobei das Verdichterbauteil (38) im Betrieb der Verdichteranordnung (10) eine oszillierende translatorische Bewegung (62) in radialer Richtung (76) ausführt.

4. Fahrzeug mit einer Verdichteranordnung (10) nach einem oder mehreren der vorangegangenen Ansprüche,
wobei sie eine Getriebeanordnung (45) zur Umwandlung einer rotierenden Bewegung (60) des elektrischen Antriebs (54) in eine translatorische Bewegung (62) des Verdichterbauteils (38) umfasst.

5. Fahrzeug mit einer Verdichteranordnung (10) nach einem oder mehreren der vorangegangenen Ansprüche,
wobei die Getriebeanordnung (45) ein Kurvengetriebe umfasst.

6. Fahrzeug mit einer Verdichteranordnung (10) nach einem oder mehreren der vorangegangenen Ansprüche,
wobei der elektrische Antrieb (54) über eine Bordspannungsquelle (3), insbesondere über die Hauptbatterie (3) des Fahrzeugs, gespeist wird und Schleifkontakte (4) zur Übertragung elektrischer Energie von der Radträgerseite zur Radnabenseite vorgesehen sind.

7. Fahrzeug mit einer Verdichteranordnung (10) nach einem oder mehreren der vorangegangenen Ansprüche,
wobei nabenseitig eine elektrische Energiequelle (5, 7, 8) insbesondere ein Energiespeicher (7), vorzugsweise ein Akkumulator, vorgesehen ist.

8. Fahrzeug mit einer Verdichteranordnung (10) nach einem oder mehreren der vorangegangenen Ansprüche,
wobei nabenseitig ein Generator (5, 8) vorgesehen ist, der die rotatorische Relativbewegung (60) zwischen nabenseitigen und radträgerseitigen Komponenten in elektrische Energie zum Antrieb der Verdichteranordnung (10) umwandelt.

9. Fahrzeug mit einer Verdichteranordnung (10) nach einem oder mehreren der vorangegangenen Ansprüche,
wobei eine Kupplungseinrichtung (70) zur Kopplung und Entkopplung eines antriebsseitigen Getriebeteil (44) mit einem nabenseitigen Getriebeteil (34) umfasst.

10. Fahrzeug mit einer Verdichteranordnung (10) nach einem oder mehreren der vorangegangenen Ansprüche,
wobei eine Einrichtung zur kontaktlosen Übertragung (6) von Energie einer radträgerseitigen Energiequelle zur Verdichteranordnung (10) vorgesehen ist.

11. Fahrzeug mit einer Verdichteranordnung (10) nach einem oder mehreren der vorangegangenen Ansprüche,
wobei sie druckmitteleinlassseitig mit einem Filter (200) verbunden ist.

12. Fahrzeug mit einer Verdichteranordnung (10) nach einem oder mehreren der vorangegangenen Ansprüche,
wobei sie ausgebildet ist, um Druckmittel aus der Reifenkavität (24) oder über Förderung durch die Verdichteranordnung (10) zum Reinigen des Filters (200) zu verwenden.

## Claims

1. Vehicle with a compressor arrangement (10) for pressure medium supply of a tyre cavity (24) of a tyre of a vehicle wheel (2), the vehicle wheel (2) comprising a wheel hub receptacle (26) and being mounted on a wheel hub (18), the wheel hub (18) being mounted on a wheel support (16) such that it can be rotated about a rotational axis (29), the compressor arrangement (10) being arranged in the region of the wheel hub receptacle (26), preferably in the wheel hub receptacle (26), the compressor arrangement (10) comprising at least one compression space (40, 42) which is arranged fixedly so as not to rotate with respect to the wheel hub (18), it being possible for the volume of the compression space (40, 42) to be changed by way of a translational movement (62) of a hub-side compressor component (38), it being possible for a pressure medium which is to be conducted into the tyre cavity (24) to be set under pressure by way of a volume reduction of the compression space (40, 42), the compressor arrangement (10) comprising an electric drive (54), and the hub-side compressor component (38) being an annular piston (36) which is configured as a double piston.

2. Vehicle with a compressor arrangement (10) according to Claim 1,
the compressor component (38) carrying out an oscillating translational movement (62) in the direction of the rotational axis (29) during operation of the compressor arrangement (10).

3. Vehicle with a compressor arrangement (10) according to Claim 1 or 2,
the compressor component (38) carrying out an oscillating translational movement (62) in the radial direction (76) during operation of the compressor arrangement (10).

4. Vehicle with a compressor arrangement (10) according to one or more of the preceding claims,
the said compressor arrangement (10) comprising a gear mechanism arrangement (45) for the conversion of a rotating movement (60) of the electric drive (54) into a translational movement (62) of the compressor component (38) .

5. Vehicle with a compressor arrangement (10) according to one or more of the preceding claims,
the gear mechanism arrangement (45) comprising a cam mechanism.

6. Vehicle with a compressor arrangement (10) according to one or more of the preceding claims,
the electric drive (54) being fed via an on-board voltage source (3), in particular via the main battery (3) of the vehicle, and rubbing contacts (4) being provided for the transmission of electric energy from the wheel support side to the wheel hub side.

7. Vehicle with a compressor arrangement (10) according to one or more of the preceding claims,
an electric energy source (5, 7, 8), in particular an energy store (7), preferably a rechargeable battery, being provided on the hub side.

8. Vehicle with a compressor arrangement (10) according to one or more of the preceding claims,
a generator (5, 8) being provided on the hub side which converts the rotational relative movement (60) between hub-side and wheel support-side components into electric energy for driving the compressor arrangement (10).

9. Vehicle with a compressor arrangement (10) according to one or more of the preceding claims,
comprising a clutch device (70) for coupling and decoupling a drive-side gear mechanism part (44) to/from a hub-side gear mechanism part (34).

10. Vehicle with a compressor arrangement (10) according to one or more of the preceding claims,
a device for the contactless transmission (6) of energy of a wheel support-side energy source to the compressor arrangement (10) being provided.

11. Vehicle with a compressor arrangement (10) according to one or more of the preceding claims,
the said compressor arrangement (10) being connected on the pressure medium inlet side to a filter (200).

12. Vehicle with a compressor arrangement (10) according to one or more of the preceding claims,
the said compressor arrangement (10) being configured to use pressure medium from the tyre cavity (24) or via delivery by way of the compressor arrangement (10) for cleaning the filter (200).

## Revendications

1. Véhicule équipé d'un ensemble compresseur (10) destiné à alimenter en fluide sous pression une cavité de pneumatique (24) d'un pneumatique d'une roue de véhicule (2), la roue de véhicule (2) comprenant un logement de moyeu de roue (26) et étant installée sur un moyeu de roue (18), le moyeu de roue (18) étant monté pivotant autour d'un axe de rotation (29) sur un support de roue (16), l'ensemble compresseur (10) étant disposé au niveau du logement de moyeu de roue (26), de préférence dans le logement de moyeu de roue (26), l'ensemble compresseur (10) comprenant au moins un espace de compression (40, 42) disposé de manière verrouillée en rotation par rapport au moyeu de roue (18), le volume de l'espace de compression (40, 42) étant variable par un mouvement de translation (62) d'une pièce de compresseur (38) côté moyeu, une diminution de volume de l'espace de compression (40, 42) permettant de pressuriser un fluide sous pression à conduire dans la cavité de pneumatique (24), l'ensemble compresseur (10) comprenant un dispositif d'entraînement électrique (54), et la pièce de compresseur (38) côté moyeu étant un piston annulaire (36) réalisé sous forme de piston double.

2. Véhicule équipé d'un ensemble compresseur (10) selon la revendication 1, dans lequel, en cours de fonctionnement de l'ensemble compresseur (10), la pièce de compresseur (38) effectue un mouvement de translation oscillatoire (62) en direction de l'axe de rotation (29).

3. Véhicule équipé d'un ensemble compresseur (10) selon la revendication 1 ou 2, dans lequel, en cours de fonctionnement de l'ensemble compresseur (10), la pièce de compresseur (38) effectue un mouvement de translation oscillatoire (62) dans la direction radiale (76) .

4. Véhicule équipé d'un ensemble compresseur (10) selon une ou plusieurs des revendications précédentes, dans lequel ledit ensemble comprend un ensemble boîte de vitesses (45) destiné à convertir un mouvement de rotation (60) du dispositif d'entraînement électrique (54) en mouvement de translation (62) de la pièce de compresseur (38).

5. Véhicule équipé d'un ensemble compresseur (10) selon une ou plusieurs des revendications précédentes, dans lequel l'ensemble boîte de vitesses (45) comprend une commande à cames.

6. Véhicule équipé d'un ensemble compresseur (10) selon une ou plusieurs des revendications précédentes, dans lequel le dispositif d'entraînement électrique (54) est alimenté par une source de tension embarquée (3), en particulier par la batterie principale (3) du véhicule, et des balais de contact (4) sont prévus pour transmettre de l'énergie électrique du côté support de roue au côté moyeu de roue.

7. Véhicule équipé d'un ensemble compresseur (10) selon une ou plusieurs des revendications précédentes, dans lequel une source d'énergie électrique (5, 7, 8), en particulier un dispositif de stockage d'énergie (7), de préférence un accumulateur, est prévue côté moyeu.

8. Véhicule équipé d'un ensemble compresseur (10) selon une ou plusieurs des revendications précédentes, dans lequel un générateur (5, 8) est prévu côté moyeu qui convertit le mouvement relatif de rotation (60) entre des pièces côté moyeu et côté support de roue en énergie électrique pour entraîner l'ensemble compresseur (10).

9. Véhicule équipé d'un ensemble compresseur (10) selon une ou plusieurs des revendications précédentes, comprenant un dispositif d'embrayage (70) destiné à enclencher et à désenclencher une partie de boîte de vitesses (44) côté entraînement avec une partie de boîte de vitesses (34) côté moyeu.

10. Véhicule équipé d'un ensemble compresseur (10) selon une ou plusieurs des revendications précédentes, dans lequel un dispositif destiné à la transmission sans contact (6) d'énergie d'une source d'énergie côté support de roue à l'ensemble compresseur (10) est prévu.

11. Véhicule équipé d'un ensemble compresseur (10) selon une ou plusieurs des revendications précédentes, dans lequel, côté entrée de fluide sous pression, ledit ensemble est relié à un filtre (200).

12. Véhicule équipé d'un ensemble compresseur (10) selon une ou plusieurs des revendications précédentes, dans lequel ledit ensemble est réalisé pour utiliser un fluide sous pression provenant de la cavité de pneumatique (24) ou obtenu par refoulement à travers l'ensemble compresseur (10) pour nettoyer le filtre (200).
